# EUROPÄISCHE PATENTANMELDUNG

(11) **EP 2 330 311 A2**
(43) Veröffentlichungstag der Anmeldung: **08.06.2011**
(21) Anmeldenummer: 10014009.4
(22) Anmeldetag: 27.10.2010
(51) Int. Cl.: F16D 63/00, F16D 49/16, F16D 65/14

(54) **Feststelleinrichtung**

(30) Priorität: 07.12.2009 DE 102009056963
(71) Anmelder: Frenotech Establishment, 9494 Schaan (LI)
(72) Erfinder: Mainardi, Gianfranco, 9444 Diepoldsau (CH)
(74) Vertreter: Säger, Manfred

(57) **Zusammenfassung**

Eine Feststelleinrichtung zum Feststellen einer Achse (5), mit einem Gehäuse (61,62), mit zwei entgegen der Kraft zumindest einer vorzugsweise als Schraube ausgebildeten Feder (10) um ein Kipplager (11) schwenkbaren Klemmbacken (12), mit mindestens einem über ein Fluid in einem Kolbenraum (8) betätigbaren Betätigungskolben (7) und mit mindestens einem von diesem bewegbahren Betätigungsglied zum Angriff an den freien Enden der Klemmbacken und zu deren Bewegung von einer Freigabelage für die Achse voneinander weg oder in eine Feststelllage aufeinander zu mit einem kraftschlüssigen Angriff mittels eines Klemmbereichs (13) an der Achse, wobei sich die Kippachse des Kipplagers im Wesentlichen parallel zu der Richtung der Achse erstreckt, kennzeichnet sich dadurch aus, dass die zumindest eine Feder (10) zwischen den Klemmbacken angeordnet ist und dass die Feder mit ihrem einen Ende kraftschlüssig an dem Betätigungskolben und mit ihrem anderen Ende gehäusefest abgestützt ist.

## Beschreibung

Die Erfindung betriftt eine gattungsgemässe Feststelleinrichtung nach dem Oberbegriff des Hauptanspruchs zum Feststellen einer Achse in Form einer feststehenden Stange oder sich drehenden Welle, mit einem Gehäuse, mit zwei entgegen der Kraft zumindest einer vorzugsweise als Schraubenfeder ausgebildeten Feder um ein Kipplager schwenkbaren Klemmbacken, mit mindestens einem über ein Fluid in einem Kolbenraum betätigbaren Betätigungskolben und mit mindestens einem von diesem bewegbaren Betätigungsglied zum Angriff an den freien Enden der Klemmbacken und zu deren Bewegung von einer Freigabelage für die Achse voneinander weg oder in eine Feststellage aufeinander zu mit einem kraftschlüssigen Angriff mittels eines Klemmbereichs an der Achse, wobei sich die Kippachse des Kipplagers im wesentlichen parallel zu der Richtung der Achse erstreckt.

Eine solche gattungsgemässe Feststelleinrichtung mit ausserhalb der Klemmbacken angeordneter Feder ist bekannt (DE 100 33 128 A1). Werden Feststelleinrichtungen mit grösserer Klemmkraft benötigt, so müssen stärkere und damit grössere Federn eingesetzt werden, was die Baugrösse der bekannten Feststelleinrichtungen sehr vergrössert, was unerwünscht ist.

Der Erfindung liegt die Aufgabe zugrunde, eine gattungsgemäße Feststelleinrichtung gemäß dem Oberbegriff des Hauptanspruchs für grössere Klemmkräfte bei gleichzeitig vergleichsweise moderater Baugrösse auszugestalten.

Diese Aufgabe wird bei einer gattungsgemäßen Feststelleinrichtung gemäß dem Oberbegriff des Hauptanspruches erfindungsgemäß durch dessen kennzeichnende Merkmale, insbesondere dadurch gelöst, dass die zumindest eine Feder zwischen den Klemmbacken angeordnet ist und dass die zumindest eine Feder mit ihrem einen Ende kraftschlüssig an dem Betätigungskolben und mit ihrem anderen Ende gehäusefest abgestützt ist.

Mit der Erfindung wird also mit Vorteil der ansonsten ungenutzte Bauraum zwischen den Klemmbacken zur Aufnahme der Federn verwendet. Dort können auch stärkere Federn bis zu einem gewissen Grad untergebracht werden, ohne dass die Baugrösse der Feststelleinrichtung zunimmt.

Zweckmässigerweise ist dabei die zumindest eine Feder von den Klemmbacken umschlossen.

Besonders einfach gestaltet sich die erfindungsgemässe Feststelleinrichtung, wenn sich die zumindest eine Feder mit dem einen Ende direkt an dem Betätigungskolben ohne weitere Bauteile abstützt, wobei sich dann anbietet, dass der Betätigungskolben im Querschnitt U-förmig mit einem U-Steg sowie zwei sich daran anschliessenden U-Schenkeln ausgebildet ist und sich die zumindest eine Feder mit dem einen Ende im Bereich des U-Steges des Betätigungskolbens abstützt.

Ohne ein gesondertes Bauteil wie beim Stand der Technik kommt die erfindungsgemässe Feststelleinrichtung aus, wenn das die freien Enden der Klemmbacken bewegende Betätigungsglied von einem Bereich der Innenseite der U-Schenkel des Betätigungskolbens gebildet ist.

Um die Klemmbacken in der Feststellage wieder gerade bzw. parallel zueinander zu stellen, ist an der den Klemmbacken zugewandten Seite des Betätigungskolbens eine diese wieder voneinander wegbewegende Führungsfläche vorgesehen, die vorzugsweise als äusserer kegelstumpfförmiger Mantel eines vorspringenden Rings ausgebildet ist.

Besonders einfach gestaltet sich die Feststelleinrichtung nach der Erfindung, wenn sich das andere Ende der zumindest einen Feder an einem parallel zu der Achse oder um einen rechten Winkel dazu gedreht verlaufenden, an dem Gehäuse festgelegten Stift, der zweckmässigerweise zylinderförmig ausgelegt sein kann, gehäusefest abgestützt und dabei durch die beiden Klemmbacken ggf. über Durchgangslöcher hindurch bis zu dem Gehäuse erstreckt und an diesem festgelegt ist.

Zur besseren Halterung des anderen Endes der zumindest einen Feder stützt sich dieses andere Ende der an dem Stift über ein dieses andere Ende mit einer Seite aufnehmendes und sich mit seiner anderen Seite den Stift umgreifendes T-Stück ab.

Die Kraft der zumindest einen Feder kann dann eingestellt werden, wenn die beiden freien Enden des Stiftes in Langlöchern auf den einander zugewandten Seiten der Klemmbacken oder in dem diesen benachbart angeordneten Gehäuse geführt sind, die sich in Wirkrichtung der zumindest einen Feder erstrecken, dass das T-Stück in dem von der zumindest einen Feder umgebenen Bereich ein Aussen- oder Innengewinde aufweist und wenn damit ein Innen- bzw. Aussengewinde an einer von aussen fluiddicht durch den Betätigungskolben hindurch geführten Einstellwelle zum Zwecke der Einstellung der Federkraft und des Arbeitspunktes der zumindest einen Feder zusammenwirkt. Damit kann eine Einstellung bzw. Abstimmung auf die Oberflächenbeschaffenheit verschiedener Achsen bewirkt werden.

Weitere zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: Eine erste Ausführungsform im schematischen Querschnitt;
- Figur 2: eine zweite Ausführungsf. im schematischen Querschnitt und
- Figur 3: eine dritte Ausführungsf. im schematischen Querschnitt.

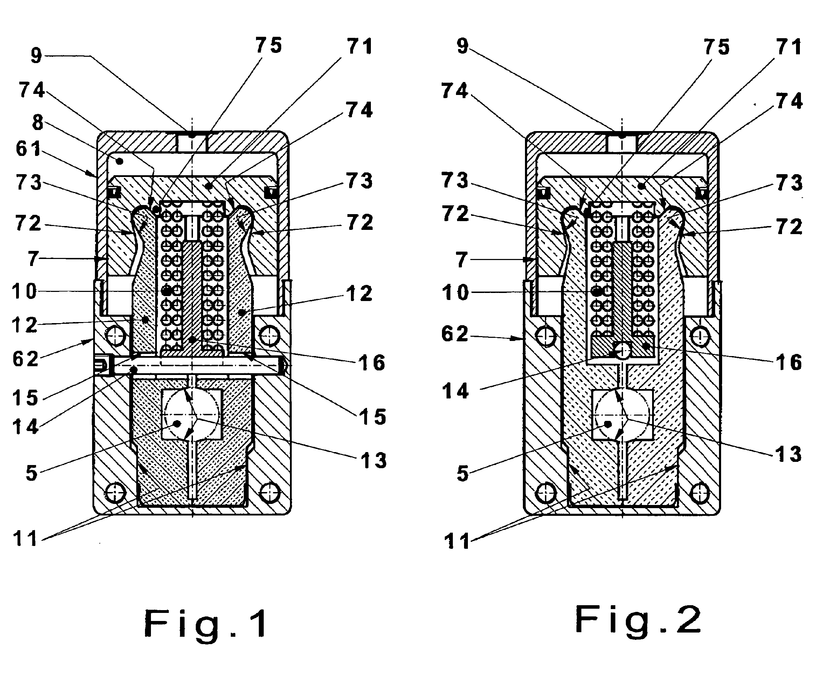

Die in Fig. 1 dargestellte Feststelleinrichtung wird exemplarisch in dieser Figur beschrieben. Die in den anderen Figuren nicht beschriebenen, aber mit demselben Bezugszeichen wie in Fig. 1 versehenen Teile stellen identische Teile dar. Die Feststelleinrichtung dient zum Feststellen einer Achse 5. Sie ist mit einem zylinderförmigen -oberen-Gehäuse 61 und einem sich daran anschliessendem im Querschnitt quadratischen -unteren- Gehäuse 62 versehen.

Im Inneren des -oberen- Gehäuses 61 ist ein im Querschnitt U-förmig mit einem U-Steg 71 sowie zwei sich daran anschliessenden U-Schenkeln ausgebildeter Betätigungskolben 7 vorgesehen unter Bildung eines Kolbenraumes 8, in den ein insgesamt mit 9 bezeichneter Fluidanschluß, vorzugsweise für Druckluft mündet.

Ferner ist die Feststelleinrichtung mit zwei entgegen der Kraft zumindest einer vorzugsweise als zwei Schraubenfedern ausgebildeten Feder 10 um ein Kipplager 11, dessen Kippachse sich im wesentlichen parallel zu der Richtung der Achse 7 erstreckt, schwenkbaren Klemmbacken 12 versehen, an deren beiden freien Enden 73 ein von dem Betätigungskolben 7 bewegbares Betätigungsglied 72 in Form einer im Bereich der beiden U-Schenkel vorgesehenen Schrägfläche zu deren Bewegung von der gezeigten Freigabelage für die Achse 5 voneinander weg oder zu deren Bewegung in die -nicht gezeigte Feststellageaufeinander zu angreift. In dieser Lage greift ein Klemmbereich 13 an der Achse 7 kraft- bzw. reibungsschlüssig an. Dabei ist das die freien Enden 73 der Klemmbacken 12 bewegende Betätigungsglied 73 vo einem Bereich der Innenseite der U-Schenkel des Betätigungskolbens 7 gebildet.

Um die Klemmbacken in der Freigabelage wieder gerade bzw. parallel zueinander zu stellen, ist an der den Klemmbacken 12 zugewandten Seite des Betätigungskolbens 7 ist eine diese (12) wieder voneinander wegbewegende Führungsfläche vorgesehen, die als äusserer kegelstumpfförmiger Mantel 74 eines vorspringenden Rings 75 ausgebildet ist.

Zwischen diesem Ring 75 stützen sich die beiden Federn 10 mit ihrem einen Ende direkt und damit im Bereich des U-Steges des Betätigungskolbens 7 kraftschlüssig ab.

Das andere Ende der zumindest einen Feder 10 ist an einem parallel zu der Achse 5 (Figur 2) oder um einen rechten Winkel dazu gedreht verlaufenden (Figur 1), an dem -unteren- Gehäuse 62 festgelegten Stift 14 über ein dieses andere Ende mit einer Seite aufnehmendes und sich mit seiner anderen Seite den Stift 14 teilweise umgreifendes T-Stück 16 gehäusefest abgestützt, wobei dass sich der Stift 14 bei der Ausführungsform nach Figur 1 durch die beiden Klemmbacken 12 über Durchgangslöcher 15 hindurch bis zu dem -unteren- Gehäuse 62 erstreckt und an diesem festgelegt ist. Bei der Ausführungsform nach Figur 2 verläuft der Stift 14 um einen rechten Winkel dazu gedreht und parallel zu der Achse 5.

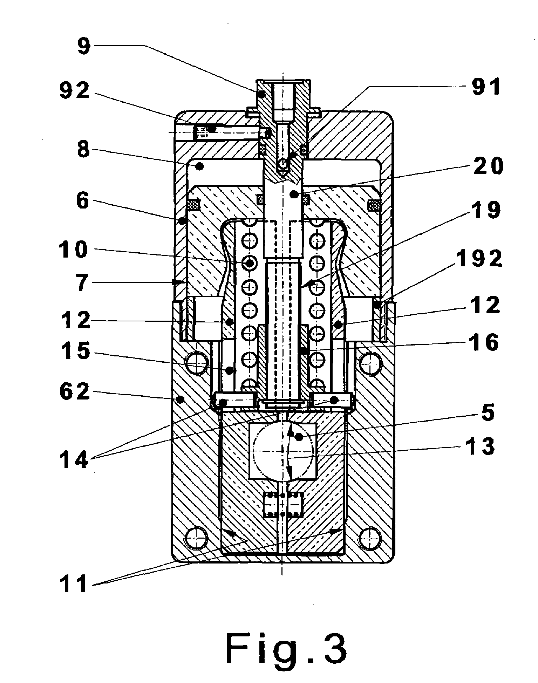

Bei der dritten Ausführungsform (Figur 3) mündet der Fluidanschluß 9, vorzugsweise für Druckluft in den Kolbenraum 8 über eine Querbohrung 91 und kann mittels einer Madenschraube 92 fixiert werden.

Die beiden freien Enden des -hier geteilt ausgebildeten- Stiftes 14' sind durch Durchgangslöcher 15' hindurchgeführt und in Langlöchern des Gehäuses an den einander ebgewandten Seiten der Klemmbacken 12 geführt, welche Langlöcher sich in der senkrecht zu der Achse 5 verlaufenden Wirkrichtung der zumindest einen Feder 10 erstrecken. Das T-Stück 16 weist in dem von der zumindest einen Feder 10 umgebenen Bereich eine Hülse 19 mit einm Innengewinde auf, mit dem ein Aussengewinde an einer von aussen fluiddicht durch den Betätigungskolben hindurch geführten Einstellwelle 20 zum Zwecke der Einstellung des Arbeitspunktes und der Kraft der zumindest einen Feder 10 zusammenwirkt. Die Langlöcher in dem unteren Gehäuse 62 verhindern dabei, dass sich das T-Stück 16 dreht, so dass die Hülse 19 durch Drehen der Einstellwelle 20 bewegt werden kann und dabei die zumindest eine Feder 10 spannt oder entlastet.

## Patentansprüche

1. Feststelleinrichtung zum Feststellen einer Achse (5), mit einem Gehäuse (61,62), mit zwei entgegen der Kraft zumindest einer vorzugsweise als Schraubenfeder ausgebildeten Feder (10) um ein Kipplager (11) schwenkbaren Klemmbacken (12), mit mindestens einem über ein Fluid in einem Kolbenraum (8) betätigbaren Betätigungskolben (7) und mit mindestens einem von diesem bewegbaren Betätigungsglied zum Angriff an den freien Enden der Klemmbacken (12) und zu deren Bewegung von einer Freigabelage für die Achse voneinander weg oder in eine Feststellage aufeinander zu mit einem kraftschlüssigen Angriff mittels eines Klemmbereichs (13) an der Achse (5), wobei sich die Kippachse des Kipplagers (11) im wesentlichen parallel zu der Richtung der Achse (5) erstreckt, **dadurch gekennzeichnet, dass** die zumindest eine Feder (10) zwischen den Klemmbacken (12) angeordnet ist und dass die Feder (10) mit ihrem einen Ende kraftschlüssig an dem Betätigungskolben (7) und mit ihrem anderen Ende gehäusefest abgestützt ist.

2. Feststelleinrichtung nach einem der vorhergehenden Ansprüche, **dadurch gekennzeichnet, dass** die zumindest eine Feder (10) von den Klemmbacken (12) umschlossen ist.

3. Feststelleinrichtung nach einem der vorhergehenden Ansprüche, **dadurch gekennzeichnet, dass** sich die zumindest eine Feder (10) mit dem einen Ende direkt an dem Betätigungskolben (7) abstützt.

4. Feststelleinrichtung nach Anspruch 3, **dadurch gekennzeichnet, dass** der Betätigungskolben (7) im Querschnitt U-förmig mit einem U-Steg (71) sowie zwei sich daran anschliessenden U-Schenkeln ausgebildet ist und dass sich die zumindest eine Feder (10) mit dem einen Ende im Bereich des U-Steges (71) des Betätigungskolbens (7) abstützt.

5. Feststelleinrichtung nach Anspruch 4, **dadurch gekennzeichnet, dass** das die freien Enden (73) der Klemmbacken (12)) bewegende Betätigungsglied von einem Bereich (72) der Innenseite der U-Schenkel des Betätigungskolbens (7) gebildet ist.

6. Feststelleinrichtung nach Anspruch 5, **dadurch gekennzeichnet, dass** an der den Klemmbacken (12) zugewandten Seite des Betätigungskolbens (7) eine diese wieder voneinander wegbewegende Führungsfläche (74) vorgesehen ist.

7. Feststelleinrichtung nach Anspruch 6, **dadurch gekennzeichnet, dass** die Führungsfläche (74) als äusserer kegelstumpfförmiger Mantel (74) eines vorspringenden Rings (75) ausgebildet ist.

8. Feststelleinrichtung nach einem der vorhergehenden Ansprüche, **dadurch gekennzeichnet, dass** sich das andere Ende der zumindest einen Feder (10) an einem parallel zu der Achse (5) oder um einen rechten Winkel dazu gedreht verlaufenden, an dem Gehäuse festgelegten Stift (14) gehäusefest abgestützt.

9. Feststelleinrichtung nach Anspruch 8, **dadurch gekennzeichnet, dass** sich der Stift (14) durch die beiden Klemmbacken (12) ggf. über Durchgangslöcher (15) hindurch bis zu dem Gehäuse (62) erstreckt und an diesem festgelegt ist (Figur 1).

10. Feststelleinrichtung nach Anspruch 8 oder 9, **dadurch gekennzeichnet, dass** sich das andere Ende der zumindest einen Feder (10) an dem Stift (14) über ein dieses andere Ende mit einer Seite aufnehmendes und sich mit seiner anderen Seite den Stift (14) umgreifendes T-Stück (16) abgestützt.

11. Feststelleinrichtung nach einem der Ansprüche 8 bis 10, **dadurch gekennzeichnet, dass** die beiden freien Enden des Stiftes (14') in Langlöchern (15') auf den einander zugewandten Seiten der Klemmbacken (12) oder in dem diesen benachbart angeordneten Gehäuse (62) geführt sind, die sich in Wirkrichtung der zumindest einen Feder (10) erstrecken, dass das T-Stück (16) in dem von der zumindest einen Feder (10) umgebenen Bereich ein Aussen- oder Innengewinde aufweist und dass damit ein Innen- bzw. Aussengewinde an einer von aussen fluiddicht durch den Betätigungskolben (7) hindurch geführten Einstellwelle (20) zum Zwecke der Einstellung der Federkraft und des Arbeitspunktes der zumindest einen Feder (10) zusammenwirkt.
